# EUROPÄISCHE PATENTANMELDUNG

(11) **EP 0 899 816 A2**
(43) Veröffentlichungstag der Anmeldung: **03.03.1999**
(21) Anmeldenummer: 98111594.2
(22) Anmeldetag: 24.06.1998
(51) Int. Cl.: H01R 4/30

(54) **Vorrichtung zum unverlierbaren Befestigen bzw. zum unverlierbaren Anschluss eines Leiters**

(30) Priorität: 29.08.1997 DE 29715523 U
(71) Anmelder: ABB PATENT GmbH, 68309 Mannheim (DE)
(72) Erfinder: Schmitt, Klaus, 69221-Dossenheim (DE); Ehredt, Hans-Peter, 68723 Schwetzingen (DE)
(74) Vertreter: Rupprecht, Klaus, Dipl.-Ing.

(57) **Zusammenfassung**

Eine Vorrichtung zum unverlierbaren Befestigen bzw. zum unverlierbaren Anschluß eines Leiters (25), vorzugsweise eine N-Leiters, an einer Leiterschiene (10), z. B. aus Aluminium oder Kupfer, umfaßt an der Leiterschiene (10) eine die Schiene an deren Längskanten (15, 16) umfassende Haltescheibe (11, 30), wobei die Haltescheibe dadurch unverdrehbar bezogen auf die Leiterschiene (10) ist, daß die Leiterschiene (10) mit der Haltescheibe (11, 30) mittels einer Schraube (19, 20) verbunden ist. Die Schraube (19, 20) ist mittels einer Querstiftes (22) unverlierbar an der Haltescheibe festgehalten, in dem der Kopf der Schraube (20, 19) und der Querstift (22) die Leiterschiene (10) und die Haltescheibe (11, 30) zwischen sich nehmen. Über den Schraubenschaft der Schraube (19, 20) wird eine Anschlußlasche (24, 35) mit einer Bohrung (26) für den vorzugsweise N-Leiter gesteckt und dabei festgeschraubt.

## Beschreibung

Die Erfindung betrifft eine Vorrichtung zum unverlierbaren Befestigen bzw. zum unverlierbaren Anschluß eines Leiters, vorzugsweise eines N-Leiters, an einer Leiterschiene z. B. aus Aluminium oder Kupfer.

Eine Vorrichtung der eingangs genannten Art ist an sich bekannt. Dabei wird an einer Leiterschiene eine Anschlußlasche befestigt, an der der N-Leiter angebracht ist. Die Befestigung der Anschlußlasche erfolgt mittels einer Schraube.

Wenn nun bei einer Demontage der N-Leiter entfernt werden soll, dann wird die Anschlußlasche entfernt, in dem die Schraube geöffnet wird. Dabei besteht die Gefahr, daß die Schraube oder ggf. die Mutter, mit der die Schraube festgeschraubt ist, sich löst oder ggf. auch zu Boden fällt.

Aufgabe der Erfindung ist es, eine Vorrichtung der eingangs genannten Art zu schaffen, bei der ein Abschrauben des N-Leiters mit einem einzigen Werkzeug möglich ist, ohne daß sich die Haltelasche von der Schiene löst oder andere Teile zu Boden fallen.

Diese Aufgabe wird erfindungsgemäß gelöst durch die kennzeichnenden Merkmale des Anspruches 1.

Erfindungsgemäß ist an der Schiene eine die Leiterschiene an deren Längskanten umfassende Haltescheibe angebracht; die Schiene wird mit der Haltescheibe mittels einer Schraube verbunden, wobei die Schraube mittels eines Querstiftes, vorzugsweise eines Splintes, unverlierbar an der Scheibe mit der Schiene festgehalten ist, in dem der Kopf der Schraube und der Querstift die Schiene und die Haltescheibe zwischen sich nehmen. Zur Fixierung des Leiters, der vorzugsweise der N-Leiter ist, ist eine Anschlußlasche vorgesehen, die über den Schraubenschaft gesteckt werden kann.

Dadurch wird erreicht, daß weder die Schraube noch die Haltescheibe sich von der Schiene lösen können und ggf. zu Boden fallen, und der Leiter mit nur einem einzigen Werkzeug abgeschraubt oder abgeklemmt werden kann.

Eine besonders vorteilhafte Ausgestaltung der Erfindung geht dahin, mittels einer weiteren Schraube an der Leiterschiene festgelegt ist. Dies hilft insbesondere mit, daß die einzelnen Teile unverlierbar an der Leiterschiene gehalten sind. Diese weitere Schraube kann eine Formschraube sein, die sich ihr Gewinde selbst schneidet.

Damit die Haltescheibe sich nicht verdrehen kann ist sie U-förmig ausgebildet und weist zwei senkrecht dazu abgebogene Schenke auf, die die Längskanten der Leiterschiene umfassen.

Die Haltescheibe kann auf ihrer den Schenkeln entgegengesetzten Seite einen Durchzug mit einem Innengewinde aufweisen, oder es besteht die Möglichkeit, daß die Haltescheibe auf ihren den Schenkeln entgegengesetzten Stegseite eine Mutter trägt, die daran befestigt und in die der Schaft der Schraube einschraubbar ist.

Die Haltescheibe weist vorteilhaft eine Rechteckform auf, an deren einer Schmalkante ein Schlitz einmündet, dessen lichte Weite dem Durchmesser des Schraubenschaftes der Schraube entspricht.

Dieser Schlitz kann sich nach außen zur Schmalkante hin erweitern, so daß die Haltelasche leicht über den Schaft der Schraube steckbar ist.

Es besteht auch die Möglichkeit, daß eine Anschlußlasche vorgesehen ist, die ein schlüssellochförmiges Loch mit einem kreisförmigen Abschnitt und einem daran anschließenden schlitzförmigen Abschnitt aufweist, wobei der Durchmesser des kreisförmigen Abschnittes dem Außendurchmesser des Kopfes der Schraube bzw. einer Sicherungsscheibe entspricht, wogegen der schlitzförmige Bereich dem Außendurchmesser des Schaftes der Schraube entspricht.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Fig. 1: eine erfindungsgemäße Vorrichtung, in perspektivischer Ansicht, von unten,
- Fig. 2: die Vorrichtung gemäß Fig. 1 von oben bzw. von der anderen Seite,
- Fig. 3 und 4: je eine Haltescheibe mit unterschiedlicher Art zum Festschrauben der Schraube, und
- Fig. 5 und 6: zwei unterschiedliche Ausgestaltungen einer Anschlußlasche.

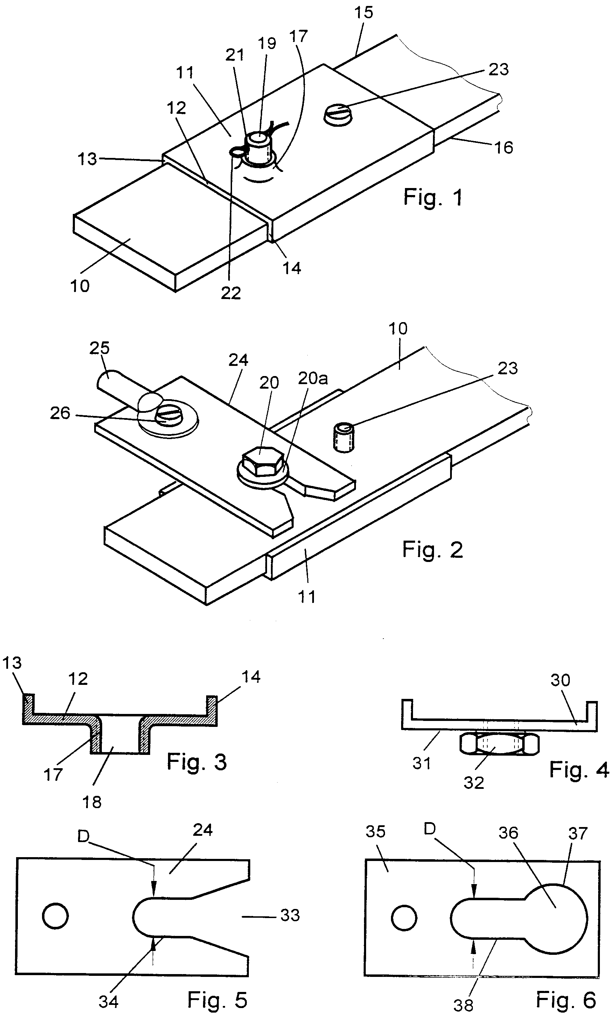

Eine Flachschiene 10 beispielsweise aus Kupfer oder Aluminium, ist von einer U-förmigen Haltescheibe 11 umfaßt, die eine Stegebene 12 und beidseitig dazu senkrecht abgekantete Schenke 13 und 14 aufweist, die im montierten Zustand, siehe Fig. 1 und 2 die Längskanten 15 und 16 der Schiene 10 umfassen.

Die Haltescheibe 11 besitzt auf der Außenfläche des Steges 12 einen dort vorspringenden Durchzug 17, der ein Gewinde 18 enthält, durch welches eine Schraube 19 mit einem Sechskantkopf 20 (siehe Fig. 2) hineingeschraubt werden kann. Der aus dem Gewinde 18 bzw. dem Durchzug 17 herausragende Teil der Schraube 19 besitzt ein Durchgangsloch 21, das die Schraube quer durchgreift und durch das ein Splint 22 hindurchgesteckt ist, so daß die Schraube 19 an der Schiene 10 und der Haltescheibe 11 fixiert ist. Die Schiene 10 und das Halteteil 11 befinden sich dabei zwischen dem Splint 22 und dem Schraubenkopf 20. Ggf. kann unter den Schraubenkopf 20 noch eine Sicherungsscheibe 22 angeordnet sein, wie die Fig. 2 zeigt.

Die Haltescheibe 11 ist weiterhin mittels einer sog. Formschraube 23 mit der Schiene 10 fest verbunden, wobei die Formschraube 23 ein selbstformendes Gewinde aufweist, welches durch die Schiene 10 hindurchgeschraubt werden kann, wie in Fig. 2 ersichtlich.

Unter den Schraubenkopf 20 bzw. unter die Sicherungsscheibe 20a ist eine Anschlußlasche 24 gesteckt, an der ein N-Leiter 25 mittels einer nicht näher dargestellten Schraubenverbindung 26 festgeschraubt ist.

Anstatt eines Durchzuges 17 kann auf der Haltescheibe 30 auf der Außenseite des Steges 31 eine Mutter 32 befestigt sein, in die der Schraubenschaft der Schraube 19 eingeschraubt werden kann.

Unter den Schraubenkopf 20 bzw. die Sicherungsscheibe 20a wird die Anschlußlasche 24 gesteckt, die, wie aus Fig. 5 ersichtlich ist, eine rechteckige Form aufweist, wobei von einer ihrer Schmalkanten eine maulförmige Öffnung 33 ausgeht, die sich auf einen Abschnitt 34 verjüngt, dessen lichte Weite D dem Außendurchmesser des Schraubenschaftes 19 entspricht.

Anstatt einer maulförmigen Öffnung 33 kann die Anschlußlasche 35 ein schlüsselförmiges Loch 36 mit einem etwa kreisförmigen Abschnitt 37 und einem daran anschließenden Abschnitt 38 aufweisen, siehe Fig. 6, deren Breite ebenfalls die lichte Weite D aufweist. Der Durchmesser des Kreisabschnitte 37 entspricht dem Durchmesser des Schraubenkopfes 20 bzw. der Sicherungsscheibe 20a. Dann kann die Anschlußlasche 35 dadurch festgelegt werden, daß sie mit dem kreisförmigen Abschnitt 37 über den Schraubenkopf 20 bzw. auch die Sicherungsscheibe 20a gesteckt und dann so verschoben wird, daß der Schraubenschaft in den Abschnitt 38 gelangt.

## Patentansprüche

1. Vorrichtung zum unverlierbaren Befestigen bzw. zum unverlierbaren Anschluß eines Leiters, vorzugsweise eines N-Leiters, an einer Leiterschiene, z. B. aus Aluminium oder Kupfer, dadurch gekennzeichnet, daß daß an der Leiterschiene (10) eine die Schiene an deren Längskanten (15, 16) umfassende Haltescheibe (11, 30) angebracht ist, wobei die Haltescheibe dadurch unverdrehbar bezogen auf die Leiterschiene (10) ist, daß die Leiterschiene (10) mit der Haltescheibe (11, 30) mittels einer Schraube (19, 20) verbunden ist, wobei die Schraube (19, 20) mittels eines Querstiftes (22) unverlierbar an der Haltescheibe festgehalten ist, in dem der Kopf (20) der Schraube (20, 19) und der Querstift (22) die Leiterschiene (10) und die Haltescheibe (11, 30) zwischen sich nehmen, und daß über den Schraubenschaft der Schraube (19, 20) eine Anschlußlasche (24, 35) mit einer Bohrung (26) für den vorzugsweise N-Leiter steckbar und dabei festschraubbar ist.

2. Vorrichtung nach Anspruch 1, dadurch gekennzeichnet, daß die Haltelasche (11, 30) mittels einer weiteren Schraube (23) an der Leiterschiene (11) festgelegt ist.

3. Vorrichtung nach Anspruch 2, dadurch gekennzeichnet, daß die weitere Schraube (23) eine Formschraube ist.

4. Vorrichtung nach einem der Ansprüche 1 bis 3, dadurch gekennzeichnet, daß die Haltescheibe (12) U-förmig ausgebildet ist und zwei senkrecht dazu abgebogene Schenkel (13, 14) aufweist, die die Längskanten (15, 16) der Leiterschiene (10) umfassen.

5. Vorrichtung nach Anspruch 4, dadurch gekennzeichnet, daß die Haltescheibe (12) auf ihrer den Schenkeln (13, 14) entgegengesetzten Seite einen Durchzug (17) mit einem Innengewinde (18) aufweist.

6. Vorrichtung nach einem der Ansprüche 1 bis 4, dadurch gekennzeichnet, daß die Haltescheibe (30) auf ihren den Schenkeln entgegengesetzten Stegseite eine Mutter (22) trägt, die daran befestigt ist und in die der Schaft der Schraube (19, 20) einschraubbar ist.

7. Vorrichtung nach einem der vorherigen Ansprüche, dadurch gekennzeichnet, daß die Haltelasche eine Rechteckform aufweist, an deren einer Schmalkante ein Schlitz einmündet, dessen lichte Weite dem Durchmesser des Schraubenschaftes der Schraube (19, 20) entspricht.

8. Vorrichtung nach Anspruch 7, dadurch gekennzeichnet, daß der Schlitz sich nach außen zur Schmalkante hin erweitert.

9. Vorrichtung nach einem der Ansprüche 1 bis 6, dadurch gekennzeichnet, daß eine Anschlußlasche (35) vorgesehen ist, die ein schlüssellochförmiges Loch mit einem kreisförmigen Abschnitt (37) und einem daran anschließenden schlitzförmigen Abschnitt (38) aufweist, wobei der Durchmesser des kreisförmigen Abschnittes (27) dem Außendurchmesser des Kopfes der Schraube (19, 20) oder ggf. einer Sicherungsscheibe (20a) entspricht, wogegen der schlitzförmige Bereich (38) dem Außendurchmesser des Schaftes der Schraube (19, 20) entspricht.
